(19) Europäisches Patentamt
European Patent Office
Office européen des brevets

(11) **EP 3 375 714 B1**

(12) **EUROPEAN PATENT SPECIFICATION**

(45) Date of publication and mention
of the grant of the patent:
**22.07.2020 Bulletin 2020/30**

(21) Application number: **16863722.1**

(22) Date of filing: **11.11.2016**

(51) Int Cl.:
**B64G 1/10** (2006.01)    **B64G 1/32** (2006.01)
**B64G 1/40** (2006.01)    **B64G 1/42** (2006.01)
**B64G 1/64** (2006.01)

(86) International application number:
**PCT/ES2016/070802**

(87) International publication number:
**WO 2017/081351 (18.05.2017 Gazette 2017/20)**

(54) **SYSTEM FOR IN-ORBIT PROPULSION VIA FLOATING CONDUCTOR CABLES**

SYSTEM FÜR ANTRIEB IM ORBIT ÜBER FLOTIERENDE LEITERKABEL

SYSTÈME DE PROPULSION EN ORBITE AU MOYEN DE CÂBLES CONDUCTEURS FLOTTANTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.11.2015 ES 201531649**

(43) Date of publication of application:
**19.09.2018 Bulletin 2018/38**

(73) Proprietors:
• **Universidad Carlos III de Madrid**
**28919 Leganés - Madrid (ES)**
• **Universidad Politécnica de Madrid**
**28040 Madrid (ES)**

(72) Inventors:
• **SÁNCHEZ ARRIAGA, Gonzalo**
**28919 Leganés (Madrid) (ES)**
• **BOMBARDELLI, Claudio**
**28040 Madrid (IT)**

(74) Representative: **Ungria López, Javier**
**Avda. Ramón y Cajal, 78**
**28043 Madrid (ES)**

(56) References cited:
WO-A1-98/48089          CN-A- 101 767 657
FR-A1- 2 809 083         US-A1- 2003 213 874
US-A1- 2012 104 176      US-A1- 2012 138 748
US-B1- 6 419 191         US-B1- 6 565 044
US-B1- 6 755 377         US-B1- 6 942 186

**Description**

**TECHNICAL FIELD OF THE INVENTION**

The present invention falls under the field of electromagnetic propulsion of aerospace systems. In particular, those systems that use long conductive tethers as elements for converting electrical energy into orbital satellite energy through the Lorentz force exerted by the Earth's magnetic field on the current that flows along the tether.

**STATE OF THE ART**

Spacecraft, such a satellites or space stations, require propulsion devices that allow them to accelerate in order to perform orbital manoeuvres, such as changes in orbit or controlled approximation to other spacecraft or objects in orbit (rendez-vous). They are also necessary to offset the action of minor disruptive forces whose continuous action would push it out of its orbit if no action were taken.

The most currently used propulsion systems comprise chemical and electric rockets. Both are based on Newton's Third Law, the Law of Action-Reaction. When gas is expelled backward at high velocity through a nozzle it exerts a force forward (thrust) on the satellite. Rockets need both a mass of fuel and energy to accelerate the jets. In the case of chemical rockets, energy is released by chemical reactions occurring when fuel is burned. In electric rockets, satellites must be equipped with a source for generating electrical power which is used to generate an electromagnetic field that accelerates the previously ionised fuel (plasma).

The need for a mass of fuel to enable operation is doubly detrimental. On the one hand, it increases launching costs because it increases the mass of the satellite and, on the other, once the fuel is exhausted the engine stops working, thereby putting an end to the satellite's useful life. In the case of electric propulsion, the onboard electrical power system typically requires the use of heavy solar panels. These reasons have driven the space industry to seek alternative propulsion systems such as solar sails or laser or microwave beams sent from the Earth.

In the case of satellites in orbit around planets with a magnetic field and ionosphere, such as the Earth or Jupiter, there is another physical mechanism, other than the Law of Action-Reaction, that may be used: the Lorentz force exerted by the magnetic field on the current that flows along a tether [Drell, S., Foley, H.M., Ruderman, M. A. Drag and propulsion of large satellites in the ionosphere: an Alfven propulsion engine in space, Journal of Geophysical Research, Vol 70, 13, pages 3131-3145, 1965]. One of the key aspects of this technology is the exchange of electric charge with the ambient plasma that makes it possible to close the circuit and enable the flow of a regular current along the tether. As explained below, this technical problem has been resolved such that the system reaches a high degree of simplicity.

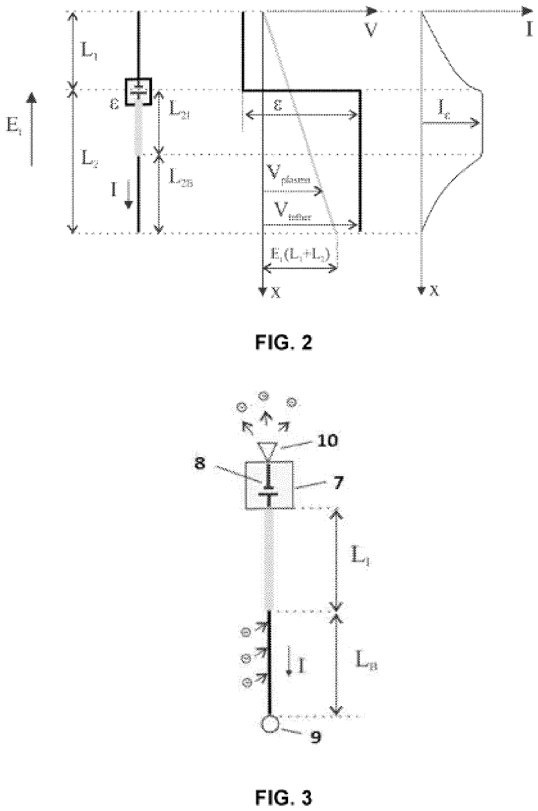

In 1993, it was proposed to leave the conductive tether bare, i.e. without insulation, and place a plasma contactor or hollow cathode on one end thereof [Sanmartin, J., Martinez-Sanchez, M. and Ahedo, E., Bare wide anodes for electro-dynamic tethers, Journal of Propulsion and Power, Vol 9, 3, pages 353-359, 1993]. Except in one very small segment near the cathode, the tether acts like a Langmuir probe that naturally captures electrons from ambient plasma. The cathode generates a low-impedance path for the electrons, which are returned to the plasma, giving rise to a stationary current along the tether (see figure 3). In the paper [Sanmartin, J., Martinez-Sanchez, M. and Ahedo, E., Bare wide anodes for electro-dynamic tethers, Journal of Propulsion and Power, Vol 9, 3, pages 353-359, 1993] two tether operating modes were proposed. In the *passive mode* for a spacecraft in low orbit around the Earth, the system does not have an external power supply and produces electric current onboard while the vehicle loses orbital energy. In *active mode,* an operating scheme was introduced having an external power source between the end of the tether and the hollow cathode. The electromotive force gives control over the current and therefore also over the Lorentz force.

However, the operation of the cathode requires an inert gas storage system and a device for controlling its flow. Throughout its life, the cathode loses efficiency because it is eroded and, when the inert gas is exhausted, stops working completely. Alternatively to traditional hollow cathodes, devices have been proposed that do not require gas such as FEACs (Field Emission Array Cathodes) or thermionic emitters. Currently, the electron emission capacity of said devices is far from that of traditional hollow cathodes.

When no active cathodes are used (such as a plasma contactor or a hollow cathode), the tether is said to be floating. In this case, a physical mechanism must be found that will allow the tether to emit electrons on its own. Two have been proposed to date. The first is the emission of secondary electrons that occurs when the tether segment with negative polarisation receives the impact of the ambient plasma ions [Sanmartín, J., Charro, M., Peláez, J., Tinao, I., Elaskar, S., Hilgers, A. and Martinez-Sanchez, M., Floating bare tether as upper atmosphere probe, Journal of Geophysical Research, Vol 111, A11310, 1-15, 2006]. However, when compared with electron trapping in the anode segment, secondary emission efficiency is low. For this reason, in 2012 a second physical mechanism was proposed: the thermionic emission that occurs if the tether is coated with a high electron-emissivity material (low-work function) [Williams, J.D., Sanmartín, J. And Rand, L.P., Low-Work function coating for entirely propellantless bare electro-dynamic tether, IEEE Transactions on Plasma Science, Vol 40, 5, pages 1441-1445, 2012]. The most promising thermionic material for this application is C12A7:e⁻, which shows emission and stability properties very superior to other ceramic coatings including, inter alia: $LAB_6$, $CeB_6$, BaO-W, Ba-W, BaO and $12CaO-7AL_2O_3(C12A7:e^-)$.

It should be noted that earlier papers on floating tethers (without active cathodes) have been proposed to artificially excite aurorae borealis [Sanmartín, J., Charro, M., Peláez, J., Tinao, I., Elaskar, S., Hilgers, A. and Martinez-Sanchez, M., Floating bare tether as upper atmosphere probe, Journal of Geophysical Research, Vol 111, A11310, 1-15, 2006] and to de-orbit satellites [Williams, J.D., Sanmartín, J. And Rand, L.P., Low-Work function coating for entirely propellantless bare electro-dynamic tether, IEEE Transactions on Plasma Science, Vol 40, 5, pages 1441-1445, 2012]. As opposed to the present invention, in these two papers the tether works passively and there is no active electrical power source that feeds the tether. All earlier designs based on electro-dynamic tethers in active mode (with external power source) have not been of the floating type, since they consist of a hollow cathode-type electron emitter or FEAC (patents: US 6459206 B1, US 6755377 B1, US 6758443 B1, US 6419191 B1, US 7118074 B1). In these patents the external electrical power source is disposed on one end of the tether.

US 2012/0104176 discloses an electric sail with voltage multipliers in tethers. FR2809083 shows an electro-dynamic propulsion system comprising a pair of opposite electrically conductive, non-isolated masts connected to two different poles of an electric power source.

## DESCRIPTION OF THE INVENTION

The present invention proposes a new floating tether design wherein the tethers themselves are responsible for trapping and emitting electrons, and the electrical power-generating source is connected to the ends of two sets of conductive tethers, and wherein each of the two sets of conductive tethers consists of at least one conductive tether. For the first time, the photoelectric emission of the tethers as a physical mechanism for achieving cathodic contact with ambient plasma is envisaged. The invention describes how the tethers should be designed so that both electron-emitting mechanisms are efficient. Some materials that could facilitate photoelectric emission are alkaline metals or the compounds $Ag-Cs_2O-Cs$, $Ag-Cs_3Sb$ and $Na_2KSb$.

The present invention relates to an orbital propulsion system for spacecraft or satellites characterised in that it comprises two sets of floating electro-dynamic conductive tether (2, 3) respectively connected to each of the two poles (4, 5) of an electrical power-generating source (6) on board a spacecraft in orbit (1).

The design of the system corresponding to the present invention can be modified in accordance with the needs of the space mission or application that uses it. The modifications comprise:

- the possible use of different types of tether cross-sections (of a substantially circular shape, of a substantially rectangular or tape shape, and of a substantially annular shape).
- the possible use of high electron-emissivity materials (thermionic or photoelectric) in the composition of the tethers and/or to coat their surfaces.
- the possible use of dielectric materials to isolate parts of the tether surface.
- the possible use of materials or treatments that provide a high absorptivity quotient against thermal emissivity in tethers in order to reach higher temperatures and increase their electronic emissivity.
- the possible use of end masses connected to one or more tethers at the opposite ends of the connection pole of the electrical power usage or storage system, in order to improve the dynamic stability of the tethers and that could include, inter alia, a mass of passive ballast, tether deployment system, another satellite, dock, satellite cover.
- the possible use of multiple tethers, not necessarily having the same design, geometric features or composition, connected to the same pole.
- each set of conductive tethers formed by two or more conductive tethers can have their conductors electrically connected therebetween at one or more points along their length.
- at least one of the electro-dynamic tethers can be substantially manufactured from materials that include at least one of the following: graphene, aluminium alloys, copper, and beryllium-copper alloys.

## DESCRIPTION OF THE FIGURES

In order to complete the description and for the purpose of helping to better understand the features of the invention, this specification is accompanied by figures 1, 2 and 3 as an integral part thereof.

The invention will be described in further detail below, making reference to an example of embodiment thereof represented in figure 1 and 2. Figure 3 reflects the current state of the art and is added to underline the comparative novelty of the present invention.

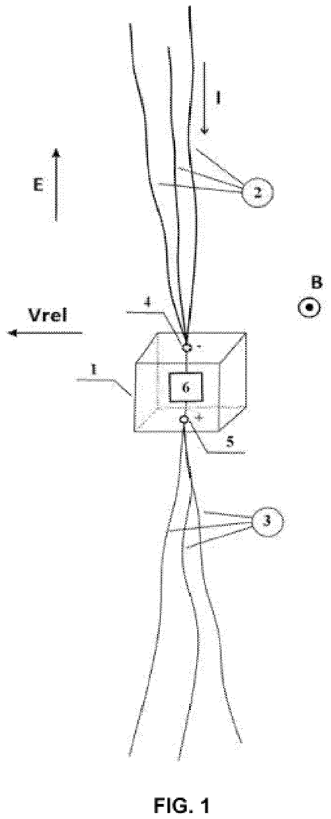

Figure 1. Shows a schematic view of the basic design and operation of the invention.

Figure 2. Explains the physical mechanism whereby the tethers exchange their charge with the surrounding plasma, obtaining a stationary current along said tethers that gives rise to a Lorentz force.

Figure 3. Shows the classic design of a propulsion system based on a bare electro-dynamic tether [Sanmartin, J., Martínez-Sánchez, M. and Ahedo, E., Bare wide anodes for electro-dynamic tethers, Journal of Propulsion and Power, Vol 9, 3, pages 353-359, 1993]. As opposed to the present invention, in this design a single electro-dynamic tether connected by one end to a spacecraft (7) and a charge (8), and by the other end to an end mass (9) is used. The tether, which is composed of an insulated part of length $L_i$ and a bare part of length $L_B$, traps electrons from the surrounding plasma. Electron emission, required to close the circuit and obtain a stationary current in the tether, is obtained by means of a hollow cathode on board a spacecraft. All the designs of propulsion systems in orbit by means of electro-dynamic tethers considered to date have a similar scheme.

## DETAILED DESCRIPTION OF THE INVENTION

The design and operation of the invention can be easily understood taking figure 1 as a reference. Two sets of bare conductive tethers (2) and (3), i.e. not electrically insulated from the surrounding plasma along their entire length or a part thereof, are deployed from the spacecraft (1). In this particular example, each set consists of three tethers. The tethers belonging to the set (2) are electrically connected to the negative pole (4), while the tethers belonging to the set (3) are electrically connected to the positive pole (5). A power-generating source is connected to the two poles (4) and (5).

The tethers interact with the surrounding environment, characterised by the presence of a magnetic field **B** and an ionosphere. Due to the orbital movement $\mathbf{v}_{rel}$ of the spacecraft with respect to the highly conductive ionospheric plasma, there is an electromotive electric field $\mathbf{E} = \mathbf{v}_{rel} \times \mathbf{B}$ in the far plasma in the referential linked to the spacecraft and a current I flows along the tethers. Said current crosses the electric power-generating source (6) and its intensity and direction can be controlled by the electromotive force supplied by it. The Lorentz force of the magnetic field exerted on the current propels the spacecraft (1).

The basic physical operating principles of the invention will be explained below making reference to figure 2. In this particular example, two tethers, of length $L_1$ and $L_2$, respectively, are connected to an electrical power-generating source. Due to the orbital movement of the spacecraft, there is a velocity $\mathbf{v}_{rel}$ between the tether and the ionospheric plasma. As a consequence of said velocity and of the presence of the magnetic field **B,** there is an electromotive electric field $\mathbf{v}_{rel} \times \mathbf{B}$ in the far plasma, in a reference system linked to the tether. Assuming that the projection of the electromotive electric field according to the direction tangential to the tethers $E_t$ is constant, the electrical potential of the far plasma (Vplasma) varies linearly along the direction of the tethers. The total increase in potential between the ends of the tether is $\Delta V_{plasma} = E_t(L_1 + L_2)$. Therefore, the electrical potential inherent to the tethers ($V_{tether}$) remains approximately constant along the lengths thereof, provided that the ohmic effects thereof are disregarded, as is reasonable for a preliminary analysis. However, upon passing from one pole to another, an increase in potential ($\varepsilon$) is observed due to the presence of the electrical power-generating source.

At those points where the potential of the tether is higher than that of the far plasma, the tether will trap electrons in the manner of a collecting Langmuir probe. At those points where the potential of the tether is lower than that of the far plasma, the tether will emit electrons, either due to the impact of ions or because the tether is manufactured from or coated with a high electron-emissivity material (low-work function), which facilitates thermionic or photoelectric emission due to the solar radiation incident upon the tether. The simplest case is that shown in figure 2 wherein a segment (of length $L_{2B}$) of the lower tether traps electrons, its insulated complementary segment (of length $L_{2l}$) does not exchange charge with the plasma and the upper tether emits electrons along the entire length thereof $L_1$. The efficiency of the tethers as a propulsion system depends on the ambient conditions (magnetic field and plasma density), tether design (cross-section, material and length) and on the electromotive force provided by the electrical power-generating source. In accordance with the mission, the system must be carefully designed, which may differ from that shown in the example of figure 2.

Since the electrons of the ambient plasma are trapped and emitted in different sections of each tether, a current profile (*I*) is finally obtained that varies along the length of the tethers. It should be noted that the current is zero at the free ends of the tethers due to being floating. The current profile depends on the electromotive force ($\varepsilon$) provided by the electrical power-generating source, which gives control over the Lorentz force exerted by the magnetic field thereon. It should be noted that, if $\varepsilon$ is sufficiently great, the direction of the current along the length of the tether will be contrary to its natural direction, which is given by the electromotive field $E_t$. This is the case represented in figure 2.

Control over the direction of the current is one of the key aspects of the system. For example, in the case of a satellite in low orbit around the Earth, if the tether system does not have any electrical power source, the current flows in the direction of $E_t$. In this case, the Lorentz force produces the re-entry of the satellite. However, if $\varepsilon$ is sufficiently high, the current flows in a direction contrary to $E_t$ and the satellite would gain altitude or could be used to offset the weak aerodynamic resistance. A propulsion force is thereby obtained without using any type of propellant or expellant.

A key advantage of the design proposed for this invention is its robustness. In the event that any tether is cut during the operation thereof, for example, due to the impact of a micro-meteoroid or fragment of space debris, the life of the satellite would not be compromised. A floating tether whose length has been reduced by a cut does not stop working; it continues to trap electrons, although the efficiency of the system will be reduced by an amount that will depend on the length of tether cut.

In order to increase the efficiency of the system, materials or coatings made of high electron-emissivity materials (thermionic materials with low-work function) may be used. Said coatings or materials may be used in one or more floating tethers and along the entire length or in a segment thereof. The system can be optimised by insulating tether segments. For example, one or more of the electro-dynamic tethers may be composed of a conductor substrate coated throughout the entire length or a part thereof with a material that facilitates thermionic or photoelectric electron emission.

A key aspect is the selection of the tether dimensions (lengths and cross-section). By way of example, the steps to follow to obtain an optimum design in the case of a system composed of a bare conductive tether followed by an insulated conductor segment, the electrical power-generating source and a conductive tether coated with a high electron-emissivity material (see figure 2). Although this model must be adapted to the specific configuration to be studied, for example, add more tethers or insulate more segments, the design scheme is always similar. For example, at least one of the tethers connected to one of the poles may be coated with a material that facilitates photoelectric emission, and at least one of the tethers connected to the other pole may have the segment nearest to the pole electrically insulated from the plasma.

First, it is necessary to calculate the current and potential profiles along the length of the tether. In the case of figure 2, if ohmic effects are disregarded, the difference in potential between the tether and the plasma is

$$V(x) \equiv V_{tether}(x) - V_{plasma}(x) = \begin{cases} V_0 - E_t x & x < L_1 \\ V_0 + \varepsilon - E_t x & L_1 < x < L \end{cases} \qquad (0.1)$$

where $V_0 < 0$ is the potential difference between the tether and the far plasma for $x=0$ and $L = L_1 + L_2$.

Second, the current profile is calculated consistently with the equation (0.1). In segment $0 < x \le L_1$, a perimeter tether $p_t$ emits electrons due to three different physical effects according to equation (1.2):

$$\frac{dI}{dx} = p_t \left[ e \int_0^\infty S(U)Y(U)dU + aT^2 \exp\left(-\frac{W}{k_B T}\right) + \frac{eN_0}{\pi} \sqrt{\frac{2e|V(x)|}{m_i}} \left(1 + \gamma |V(x)|\right) \right] \qquad (0.2)$$

The first term represents the photoelectric effect and involves solar flux $S(U)$ of energy incident on the tether (number of photons by unit of time, surface and energy $(U)$ and quantum yield $Y(U)$ (photoelectric yield) of the tether, i.e. the number of photoelectrons extracted per incident energy photon $U$. Photoelectric emission by the tether itself has not been previously proposed in applications of bare electro-dynamic tethers. The second term is thermionic emission, proposed in Ref. [Williams, J.D., Sanmartín, J. and Rand, L.P., Low-Work function coating for entirely propellantless bare electrodynamic tether, IEEE Transactions on Plasma Science, Vol 40, 5, pages 1441-1445, 2012]. This mechanism involves the Richardson constant ($a = 1.2 \times 10^6 \ A/m^2 K^2$), the Boltzmann constant $(B)$ and the temperature $(T)$ and the tether work function $(W)$, respectively. The Eq. (0.2) assumes, for the sake of simplicity, that the thermionic current emitted is established by the Richardson-Dushman equation, ignoring the Schottky and *space-charge-limited* effect. The third term is the current emitted when the tether receives the impact of the ions, a mechanism proposed in Ref. [Sanmartín, J., Charro, M., Peláez, J., Tinao, I., Elaskar, S., Hilgers, A. and Martinez-Sanchez, M., Floating bare tether as upper atmosphere probe, Journal of Geophysical Research, Vol 111, A11310, 1-15, 2006]. It depends on plasma density $(N_0)$, on the mass $(m_i)$ of the plasma ions, on the charge of the electron (e) and on the product $\gamma|\Delta V|$ that represents the number of electrons emitted per ion impacted.

Depending on the design of the tethers, for example whether these are coated with a material with low $W$ or high $Y(U)$, and on the operation thereof (temperature they may reach), it is to be expected that one of the three terms will prevail over the others.

The segment $L_1 < x \le L_1 + L_{21}$ is electrically insulated from the plasma, due to which the current remains constant throughout $x$:

$$\frac{dI}{dx} = 0 \qquad L_1 < x \le L_1 + L_{2i} \qquad (0.3)$$

Lastly, a good approximation for modelling the electrons trapped in the segment $L_1 + L_{21} \leq x < L$ is the Orbital-Motion-Limited (OML) theory, under a high potential difference regime $V(x)$ [Sanmartín, J., Martínez-Sánchez, M. and Ahedo, E., Bare wire anode for electrodynamic tethers, Journal of Propulsion and Power, Vol 9, 3, pages 353-359, 1993]:

$$\frac{dI}{dx} = -\frac{ep_t N_0}{\pi}\sqrt{\frac{2eV(x)}{m_e}} \qquad L_1 + L_{21} \leq x < L \qquad (0.4)$$

The integration of the Equations (0.2), (0.3) and (0.4) with the potential given by (0.1) and the boundary conditions $I(0)=I(L)=0$ provides the current profile $I(x)$ and the value of $V_0$. It should be noted that, in order for the current to flow in a direction opposite to $E_t$, the electromotive force of the power-generating source must satisfy $\varepsilon > E_t L$.

Knowing the current profile, the figures of merit are built:

Lorentz force (thrust) $\mathbf{F} = \int_0^L \mathbf{I} \times \mathbf{B} dx$

Thrust efficiency

$$\eta = \frac{\mathbf{F} \cdot \mathbf{v}_o}{\varepsilon I_G}$$

Useful mechanical power per unit mass

$$\kappa = \frac{\mathbf{F} \cdot \mathbf{v}_{orl}}{m_t}$$

Cut probability

$$N_c = -\pi L \Delta t_{mission} \int_{\delta_{min}}^{\delta_\infty} D_{eff}(\delta)\frac{dG}{d\delta}d\delta$$

proposed earlier for traditional electro-dynamic tethers equipped with plasma contactors [Sanmartín, J., Martínez-Sánchez, M. and Ahedo, E., Bare wire anode for electrodynamic tethers, Journal of Propulsion and Power, Vol 9, 3, pages 353-359, 1993][J. Sanmartín, A. Sanchez-Torres, S.B. Khan, G. Sanchez-Arrriaga and M. Charro, Optimum sizing of bare-tethers for de-orbiting satellites at end of mission, Advances in Space Research 56, 7, 1485-1492, 2015].

The total mass of the tethers $m_t$, orbital velocity $\mathbf{v}_{orb}$, expected mission time $\Delta t_{mission}$, effective tether diameter $D_{eff}$, flow of micrometeoroids $G$ with size $\delta$, maximum micrometeroid size $\delta_\infty$ and minimum size that can cut the tether $\delta_{min}$ are defined in the previous equations. The figures of merit of greatest interest to the particular application are selected in accordance with the mission and the dimensions of the tether that maximise them (or minimise them in the case of $N_c$).

The foregoing description should be understood as an example of embodiment for the sole purpose of illustrating the operation and optimisation of the system and not as a universal design.

A crucial aspect in the optimum design of the system in those cases where its operation must be dominated by thermionic emission is tether temperature. This aspect is critical due to the exponential behaviour of the current emitted with the factor $W/k_B T$ in equation (0.2). Ignoring heating due to the Joule effect and the energy provided by the electrons upon impacting the anodic segment, the equilibrium temperature $T_{eq}$ of the tether is determined by a balance between solar heating and radiative cooling according to the equation:

$$T_{eq} = \left( \frac{\alpha_{abs}}{\varepsilon_{emis}} \frac{S}{\pi \sigma_B} \right)^{1/4} \qquad (0.5)$$

where S is the solar constant, $\delta_B$ is the Stefan-Boltzmann constant and $\alpha_{ab}$ and $\varepsilon_{emis}$ are tether absorptivity and emissivity, respectively.

In order to ensure reasonable efficiency values, the emitted and trapped current densities must be of the same order, which provides the following connection between the work function of the material and its temperature [see equations (0.2) and (0.4)]

$$W \approx -k_B T_{eq} \ ln \left( \frac{e N_0}{A \pi T_{eq}^2} \sqrt{\frac{E_t L}{m_e}} \right) \qquad (0.6)$$

The selection of the quotient $\alpha_{abs}/\varepsilon_{emis}$ in equation (0.5) is critical since the temperature must be comprised within a certain operating range. The tether must be hot to favour thermionic electron emission but without exceeding the temperature limit above which the material loses mechanical properties. The state of the art of the work functions of the materials $LaB_6$ and $CeB_6$ stand at around 2.5 eV and for the electride C12A7:e⁻ it may potentially be 0.65 eV [Y. Toda, K. Kobayashi, K. Hayashi, S. Ueda, T. Kamiya, M. Hirano and H. Hosono, Field Emission of Electron anions clathrated in subnanometer-sized cages in [Ca24Al28O64]4+(4e-), Adv. Matter, 16, 685-689, 2004]. These values, together with the ambient parameters $E_t$ and $N_0$ in low orbit around the Earth, indicate that the temperature of the tether must be within 300 and 1,000 K (higher if the conductor material can support it). These two temperatures conduct at quotients of $\alpha_{abs}/\varepsilon_{emis}$ of around 1 and 130, respectively.

**Claims**

1.  A system for in-orbit propulsion via floating conductive tethers on board a spacecraft (1), **characterised in that** it comprises two sets of floating electrodynamic conductive tethers (2, 3) connected respectively to each of the two poles (4, 5) of an electrical power source (6), wherein each set is formed by at least one floating conductive tether, and wherein the floating tethers themselves are responsible for both the capture of electrons and their emission through thermionic or photoelectric effect.

2.  The system, according to claim **1,** wherein each set of conductive tethers formed by two or more conductive tethers has its conductors electrically connected to each other at one or more points along their length.

3.  The system, according to any of claims **1, 2,** wherein at least one of its electro-dynamic tethers has an end mass connected to the opposite end of the pole that connects to the electrical power source.

4.  The system, according to claim **3,** wherein the end mass comprises at least one of the following elements: mass of passive ballast, tether deployment system, another satellite, dock, satellite cover.

5.  The system, according to any one of claims **1, 2, 3, 4,** wherein one or more of its electrodynamic tethers has a substantially circular cross-section, a substantially annular cross-section, or is substantially tape shaped.

6.  The system, according to any one of the preceding claims, wherein at least one of its electrodynamic tethers is composed by a material that facilitates thermionic or photoelectric electron emission.

7.  The system, according to claim **6,** wherein the material that facilitates thermionic electron emission includes at least one of the following compounds: $LaB_6$, $CeB_6$, BaO-W, Ba-W, BaO and $12CaO\text{-}7Al_2O_3$(C12A7:e⁻).

8.  The system, according to claim **6,** wherein the material that facilitates photoelectric electron emission includes at least one alkaline metal or any of the compounds Ag-$Cs_2$O-Cs, Ag-$Cs_3$Sb and $Na_2$KSb.

9.  The system, according to any one of claims **1, 2, 3, 4, 5,** wherein one or more of its electro-dynamic tethers is composed of a conductor substrate coated along the entire length or a part thereof with a material that facilitates thermionic or photoelectric electron emission.

10. The system, according to claim **9,** wherein the material that facilitates thermionic emission includes at least one of the following: $LaB_6$, $CeB_6$, BaO-W, Ba-W, BaO and $12CaO-7Al_2O_3(C12A7:e^-)$.

11. The system, according to claim **9,** wherein the material that facilitates photoelectric emission includes at least one alkaline metal or any of the compounds $Ag-Cs_2O-Cs$, $Ag-Cs_3Sb$ and $Na_2KSb$.

12. The system, according to any one of claims **1, 2, 3, 4, 5,** wherein one or more of its electro-dynamic tethers is coated along the entire length or a part thereof with an insulating material.

13. The system, according to any one of claims **1, 2, 3, 4, 5, 9, 10, 11, 12,** wherein at least one of its electro-dynamic tethers is manufactured from materials that include at least one of the following: graphene, aluminium alloys, copper, beryllium-copper alloys.

14. The system, according to any one of claims **1, 2, 3, 4, 5,** wherein at least one of the tethers connected to one of the poles is coated with a material that facilitates photoelectric emission, and at least one of the tethers connected to the other pole has the segment nearest the pole electrically insulated from the plasma.

**Patentansprüche**

1. System zum Antrieb im Orbit über flotierende leitfähige Tether an Bord eines Raumflugkörpers (1), **dadurch gekennzeichnet, dass** es zwei Sätze flotierender elektrodynamischer leitfähiger Tether (2, 3) umfasst, die jeweils mit einem der beiden Pole (4, 5) einer elektrischen Stromquelle (6) verbunden sind, wobei jeder Satz durch mindestens ein flotierendes leitfähiges Tether gebildet wird und wobei die flotierenden Tether selbst sowohl für das Einfangen von Elektronen als auch für ihre Emission durch den thermionischen oder photoelektrischen Effekt verantwortlich sind.

2. System gemäß Anspruch 1, wobei die Leiter von jedem Satz leitfähiger Tether, der durch zwei oder mehr leitfähige Tether gebildet ist, an einem oder mehreren Punkten entlang ihrer Länge elektrisch miteinander verbunden sind.

3. System gemäß einem der Ansprüche 1, 2, wobei eine Endmasse von mindestens einem von dessen elektrodynamischen Tethern mit dem entgegengesetzten Ende des Pols verbunden ist, der eine Verbindung zur elektrischen Stromquelle herstellt.

4. System gemäß Anspruch 3, wobei die Endmasse mindestens eines der folgenden Elemente umfasst: eine Masse passiven Ballasts, ein Kabelentfaltungssystem, einen anderen Satelliten, ein Dock, eine Satellitenabdeckung.

5. System gemäß einem der Ansprüche 1, 2, 3, 4, wobei eines oder mehrere von dessen elektrodynamischen Tethern einen im Wesentlichen zirkulären Querschnitt, einen im Wesentlichen ringfömigen Querschnitt aufweist oder im Wesentlichen bandförmig ist.

6. System gemäß einem der vorhergehenden Ansprüche, wobei mindestens eines von dessen elektrodynamischen Tethern aus einem Material besteht, welches die thermionische oder photoelektrische Elektronenemission erleichtert.

7. System gemäß Anspruch 6, wobei das Material, welches die thermionische Elektronenemission erleichtert, mindestens eine der folgenden Verbindungen einschließt: $LaB_6$, $CeB_6$, BaO-W, Ba-W, BaO und $12CaO-7Al_2O_3(C12A7:e^-)$.

8. System gemäß Anspruch 6, wobei das Material, welches die photoelektrische Elektronenemission erleichtert, mindestens ein Alkalimetall oder eine der Verbindungen $Ag-Cs_2O-Cs$, $Ag-Cs_3Sb$ und $Na_2KSb$ einschließt.

9. System gemäß einem der Ansprüche 1, 2, 3, 4, 5, wobei eines oder mehrere von dessen elektrodynamischen Tethern aus einem Leitersubstrat besteht, das entlang der gesamten Länge oder eines Teils davon mit einem Material beschichtet ist, welches die thermionische oder photoelektrische Elektronenemission erleichtert.

10. System gemäß Anspruch 9, wobei das Material, welches die thermionische Emission erleichtert, mindestens eines der Folgenden einschließt: $LaB_6$, $CeB_6$, BaO-W, Ba-W, BaO und $12CaO-7Al_2O_3(C12A7:e^-)$.

11. System gemäß Anspruch 9, wobei das Material, welches die photoelektrische Emission erleichtert, mindestens ein Alkalimetall oder eine der Verbindungen Ag-$Cs_2$O-Cs, Ag-$Cs_3$Sb und $Na_2$KSb einschließt.

12. System gemäß einem der Ansprüche 1, 2, 3, 4, 5, wobei eines oder mehrere von dessen elektrodynamischen Tethern entlang der gesamten Länge oder eines Teils davon mit einem isolierenden Material beschichtet ist.

13. System gemäß einem der Ansprüche 1, 2, 3, 4, 5, 9, 10, 11, 12, wobei mindestens eines von dessen elektrodynamischen Tethern aus Materialien hergestellt ist, die mindestens eines der folgenden einschließen: Graphen, Aluminiumlegierungen, Kupfer, Beryllium-Kupfer-Legierungen.

14. System gemäß einem der Ansprüche 1, 2, 3, 4, 5, wobei mindestens eines der mit einem der Pole verbundenen Tether mit einem Material beschichtet ist, dass die photoelektrische Emission erleichtert, und der Abschnitt von mindestens einem der mit dem anderen Pol verbundenen Tether, der dem Pol am nächsten ist, elektrisch vom Plasma isoliert ist.

## Revendications

1. Système de propulsion en orbite au moyen de câbles conducteurs flottants embarqués sur un astronef (1), **caractérisé en ce qu'**il comprend deux groupes de câbles conducteurs flottants électrodynamiques (2, 3) reliés respectivement à chacun des deux pôles (4, 5) d'une source d'énergie électrique (6), dans lequel chaque groupe est formé d'au moins un câble conducteur flottant, et dans lequel les câbles flottants eux-mêmes sont responsables de la capture d'électrons et de leur émission par effet thermo-ionique ou photoélectrique.

2. Système selon la revendication 1, dans lequel chaque groupe de câbles conducteurs formé de deux câbles conducteurs ou plus possède ses conducteurs reliés électriquement les uns aux autres au niveau d'un ou plusieurs points sur leur longueur.

3. Système selon l'une quelconque des revendications 1 ou 2, dans lequel au moins l'un de ses câbles électrodynamiques possède une masse d'extrémité reliée à l'extrémité opposée du pôle qui est relié à la source d'énergie électrique.

4. Système selon la revendication 3, dans lequel la masse d'extrémité comprend au moins l'un des éléments suivants : une masse de ballast passif, un système de déploiement de câble, un autre satellite, une station d'arrimage, et une protection de satellite.

5. Système selon l'une quelconque des revendications 1, 2, 3 et 4, dans lequel un ou plusieurs de ses câbles électrodynamiques possède une section transversale sensiblement circulaire, une section transversale sensiblement annulaire, ou est sensiblement de forme effilée.

6. Système selon l'une quelconque des revendications précédentes, dans lequel au moins l'un de ses câbles électrodynamiques est composé d'un matériau qui facilite l'émission thermo-ionique ou photoélectrique d'électrons.

7. Système selon la revendication 6, dans lequel le matériau qui facilite l'émission thermo-ionique d'électrons comprend au moins l'un des composés suivants : $LaB_6$, $CeB_6$, BaO-W, Ba-W, BaO et $12CaO-7Al_2O_3(C12A7:e')$.

8. Système selon la revendication 6, dans lequel le matériau qui facilite l'émission photoélectrique d'électrons comprend au moins un métal alcalin ou un quelconque des composés Ag-$Cs_2$O-Cs, Ag-$Cs_3$Sb et $Na_2$KSb.

9. Système selon l'une quelconque des revendications 1, 2, 3, 4 ou 5, dans lequel un ou plusieurs de ses câbles électrodynamiques est/sont composé(s) d'un substrat conducteur recouvert sur toute sa longueur ou sur une partie de celui-ci avec un matériau qui facilite l'émission thermo-ionique ou photoélectrique d'électrons.

10. Système selon la revendication 9, dans lequel le matériau qui facilite l'émission thermo-ionique comprend au moins l'un de ce qui suit : $LaB_6$, $CeB_6$, BaO-W, Ba-W, BaO et $12CaO-7Al_2O_3(C12A7:e')$.

**11.** Système selon la revendication 9, dans lequel le matériau qui facilite l'émission photoélectrique comprend au moins un métal alcalin ou un quelconque des composés Ag-Cs$_2$O-Cs, Ag-Cs$_3$Sb et Na$_2$KSb.

**12.** Système selon l'une quelconque des revendications 1, 2, 3, 4 ou 5, dans lequel un ou plusieurs de ses câbles électrodynamiques est/sont recouvert(s) sur toute la longueur ou sur une partie de celle-ci avec un matériau isolant.

**13.** Système selon l'une quelconque des revendications 1, 2, 3, 4, 5, 9, 10, 11 ou 12, dans lequel au moins l'un de ses câbles électrodynamiques est fabriqué avec des matériaux qui comprennent au moins l'un de ce qui suit : du graphène, des alliages d'aluminium, du cuivre, des alliages de béryllium-cuivre.

**14.** Système selon l'une quelconque des revendications 1, 2, 3, 4 et 5, dans lequel au moins l'un des câbles relié à l'un des pôles est recouvert avec un matériau qui facilite l'émission photoélectrique, et au moins l'un des câbles relié à l'autre pôle possède le segment le plus proche du pôle isolé électriquement du plasma.

**FIG. 1**

**FIG. 2**

**FIG. 3**

## REFERENCES CITED IN THE DESCRIPTION

### Patent documents cited in the description

- US 6459206 B1
- US 6755377 B1
- US 6758443 B1
- US 6419191 B1
- US 7118074 B1
- US 20120104176 A
- FR 2809083

### Non-patent literature cited in the description

- **DRELL, S. ; FOLEY, H.M. ; RUDERMAN, M. A.** Drag and propulsion of large satellites in the ionosphere: an Alfven propulsion engine in space. *Journal of Geophysical Research,* 1965, vol. 70 (13), 3131-3145
- **SANMARTIN, J. ; MARTINEZ-SANCHEZ, M. ; AHEDO, E.** Bare wide anodes for electro-dynamic tethers. *Journal of Propulsion and Power,* 1993, vol. 9 (3), 353-359
- **SANMARTÍN, J. ; CHARRO, M. ; PELÁEZ, J. ; TINAO, I. ; ELASKAR, S. ; HILGERS, A. ; MARTINEZ-SANCHEZ, M.** Floating bare tether as upper atmosphere probe. *Journal of Geophysical Research,* 2006, vol. 111 (A11310), 1-15
- **WILLIAMS, J.D. ; SANMARTÍN, J. ; RAND, L.P.** Low-Work function coating for entirely propellantless bare electro-dynamic tether. *IEEE Transactions on Plasma Science,* 2012, vol. 40 (5), 1441-1445
- **SANMARTIN, J. ; MARTÍNEZ-SÁNCHEZ, M. ; AHEDO, E.** Bare wide anodes for electro-dynamic tethers. *Journal of Propulsion and Power,* 1993, vol. 9 (3), 353-359
- **WILLIAMS, J.D. ; SANMARTÍN, J. ; RAND, L.P.** Low-Work function coating for entirely propellantless bare electrodynamic tether. *IEEE Transactions on Plasma Science,* 2012, vol. 40 (5), 1441-1445
- **SANMARTÍN, J. ; MARTÍNEZ-SÁNCHEZ, M. ; AHEDO, E.** Bare wire anode for electrodynamic tethers. *Journal of Propulsion and Power,* 1993, vol. 9 (3), 353-359
- **J. SANMARTÍN ; A. SANCHEZ-TORRES ; S.B. KHAN ; G. SANCHEZ-ARRRIAGA ; M. CHARRO.** Optimum sizing of bare-tethers for de-orbiting satellites at end of mission. *Advances in Space Research,* 2015, vol. 56 (7), 1485-1492
- **Y. TODA ; K. KOBAYASHI ; K. HAYASHI ; S. UEDA ; T. KAMIYA ; M. HIRANO ; H. HOSONO.** Field Emission of Electron anions clathrated in subnanometer-sized cages in [Ca24Al28O64]4+(4e-). *Adv. Matter,* 2004, vol. 16, 685-689